# FASCICULE DE BREVET EUROPEEN

(11) **EP 3 031 369 B1**
(45) Date de publication et mention de la délivrance du brevet: **13.11.2019**
(21) Numéro de dépôt: 15197637.0
(22) Date de dépôt: 02.12.2015
(51) Int. Cl.: A47J 43/25

(54) **ENSEMBLE MULTI-RAPES DEMONTABLE**
ABNEHMBARE MEHRFACH-REIBEN-ANORDNUNG
REMOVABLE MULTI-RASP ASSEMBLY

(30) Priorité: 08.12.2014 FR 1462080
(43) Date de publication de la demande: 15.06.2016
(73) Titulaire: SEB S.A., 69130 Ecully (FR)
(72) Inventeur: BENOIT, David, 74540 GRUFFY (FR); DE LA COUSSAYE, Philippe, 74940 ANNECY LE VIEUX (FR); PLICHON, Stéphane, 74350 ALLONZIER-LA-CAILLE (FR); HOENDERDOS, Robin, 3015XH ROTTERDAM (NL); VERKAIK, Marcel, 2611WP DELFT (NL); GEELS, Abke, 2635HA DEN HOORN (NL); ASSIES, Mark, 3531AK Utrecht (NL)
(74) Mandataire: Bourrières, Patrice

(56) Documents cités:
- WO-A1-2008/095316
- US-A- 4 055 308
- US-A1- 2011 290 926
- US-A1- 2014 246 527

## Description

La présente invention concerne un article de cuisine du type râpe destiné à être utilisé pour la préparation d'aliments, notamment pour râper ou trancher.

On connaît notamment du document USD593817, des articles de cuisine du type râpe formant un ensemble multi-râpes comportant une première et une deuxième râpes agencées en vis à vis et une partie de préhension. L'ensemble multi-râpes forme un récipient vertical pour collecter les aliments préparés. Le récipient vertical comprend une ouverture supérieure et une poignée de préhension agencée au dessus de l'ouverture supérieure.

Cependant, l'accès à l'intérieur du récipient formé par un tel ensemble multi-râpes, notamment pour le nettoyage, n'est pas aisé.

De plus, la poignée de préhension est de petite taille et pour un meilleur maintien, l'utilisateur peut prendre à pleine main l'ensemble multi-râpes et notamment la râpe non utilisée, qui est accessible, et qui peut blesser la main de l'utilisateur.

Le but de la présente invention est de remédier aux inconvénients précités et de proposer un ensemble multi-râpes présentant une ergonomie optimisée pour permettre à l'utilisateur de râper ou trancher des aliments facilement, en toute sécurité.

Un autre but de l'invention est de proposer un ensemble multi-râpes qui soit de conception simple et économique à mettre en œuvre.

Un autre but de l'invention est de proposer un ensemble multi-râpes qui puisse être nettoyé et rangé facilement.

Ces buts sont atteints avec un ensemble multi-râpes tel que décrit par la revendication 1.

Un tel ensemble multi-râpes comportant au moins des première et deuxième râpes démontables permet un nettoyage aisé des deux faces des râpes après utilisation.

De plus, la partie de préhension recouvre la râpe non utilisée et rend cette dernière inaccessible à la main de l'utilisateur. La partie de préhension qui recouvre la râpe non utilisée présente une surface de préhension importante permettant une prise en main sûre. Ainsi, on obtient un ensemble multi-râpes pouvant être utilisé en toute sécurité.

Par la partie de préhension recouvre la râpe non utilisée et rend cette dernière inaccessible à la main de l'utilisateur, on comprend que la partie de préhension recouvre intégralement la râpe non utilisée en position assemblée de travail.

Par démontable ou amovible, on comprend que les première et deuxième râpes ainsi que la partie de préhension peuvent être séparées par l'utilisateur facilement, sans nécessiter la mise en œuvre d'un outil.

De préférence, les première et deuxième râpes comportent des moyens d'assemblage mâle/femelle.

Cette disposition permet d'obtenir un assemblage simple, notamment selon une seule direction d'assemblage.

Avantageusement, les moyens d'assemblage mâle sont formés par au moins une protubérance et les moyens d'assemblage femelle sont formés par au moins un logement.

Cette disposition permet d'obtenir des moyens d'assemblage des râpes particulièrement simples et économiques.

Avantageusement, la partie de préhension comporte des moyens de maintien des première et deuxième râpes en position assemblée.

Ainsi, l'assemblage de la partie préhension sur les première et deuxième râpes en position assemblée permet de former l'ensemble multi-râpes de manière simple, sans pièce supplémentaire.

Selon l'invention, la partie de préhension présente une forme tronconique s'étendant selon un axe longitudinal et comportant une section transversale en forme de C comprenant deux extrémités libres, les moyens de maintien étant formés par lesdites extrémités libres.

Cette disposition permet d'obtenir une partie de préhension dont la forme assure une bonne prise en main tout en assurant la fonction de maintien des première et deuxième râpes en position assemblée.

Selon l'invention, les première et deuxième râpes s'étendent selon l'axe longitudinal et comportent deux parois latérales agencées de part et d'autres dudit axe longitudinal et les extrémités libres coopèrent avec les parois latérales de la première ou de la deuxième râpe en position assemblée.

La partie de préhension est agencée facilement sur les râpes, en masquant la première ou la deuxième râpe, selon une direction d'assemblage parallèle à l'axe longitudinal.

De préférence, la partie de préhension et les première et deuxième râpes comportent des moyens de verrouillage de la partie de préhension sur la première ou sur la deuxième râpe en position assemblée.

La partie de préhension s'assemble sur les première et deuxième râpes pour les maintenir en position assemblée et la partie de préhension, notamment en fin de l'opération d'assemblage, se verrouille sur la première ou la deuxième râpe. Ainsi, cette disposition permet d'obtenir un ensemble multi-râpes qui peut être utilisé vigoureusement, sans risque de désassemblage.

Avantageusement, les moyens de verrouillage de la partie de préhension sont formés par un logement de réception et les moyens de verrouillage des première et deuxième râpes sont formés par un verrou mobile muni d'un bouton de manœuvre.

Cette disposition permet d'obtenir des moyens de verrouillage de la partie préhension sur la première ou la deuxième râpe particulièrement simples et économiques à réaliser.

De préférence, les première et deuxième râpes forment un récipient muni d'une ouverture en position assemblée.

Cette disposition permet d'obtenir un réceptacle pour collecter les aliments préparés.

Avantageusement la partie préhension forme un bec verseur agencé prés de l'ouverture.

Cette disposition permet d'obtenir de manière simple et économique un bec verseur qui facilite la distribution des aliments préparés.

De préférence, l'ensemble multi-râpes comporte un pied antidérapant.

Cette disposition permet d'utiliser l'ensemble multi-râpes sur tout type de support, notamment lisse ou humide, sur lequel il pourrait glisser lors de son utilisation.

Avantageusement, les première et deuxième râpes comportent une plaque métallique munie d'ouvertures formant des saillies effilées et une bordure périphérique en matière plastique, ladite bordure périphérique étant obtenue par une opération de surmoulage sur ladite plaque métallique.

Une bordure en matière plastique agencée autour des plaques métalliques permet d'obtenir des râpes sans bords coupants. De plus, il est facile d'agencés des moyens d'assemblage dans une bordure en plastique, notamment lors de l'injection.

De préférence, le pied antidérapant est réalisé par une opération de surmoulage partiel sur la bordure périphérique.

L'invention sera mieux comprise à l'étude du mode de réalisation pris à titre nullement limitatif et illustré dans les figures annexées dans lesquelles :
- La figure 1 illustre une vue en perspective d'un ensemble multi-râpes selon un mode particulier de réalisation de l'invention.
- La figure 2 illustre une vue en perspective éclatée de l'ensemble multi-râpes illustrée sur la figure 1, les deux râpes et la partie de préhension étant en position pour l'assemblage.
- La figure 3 illustre une vue en perspective éclatée de l'ensemble multi-râpes illustrée sur la figure 1.

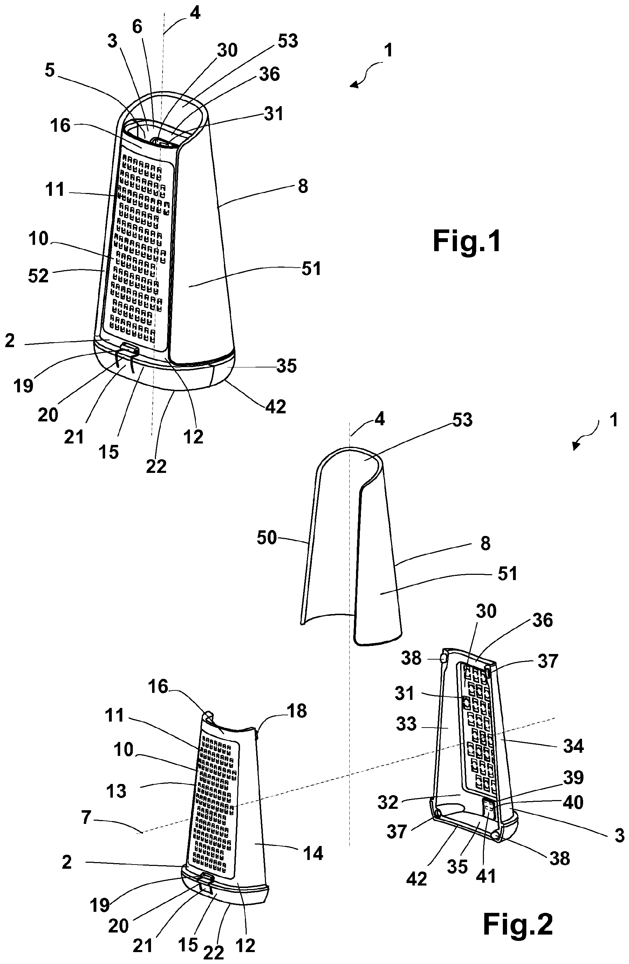

Selon le mode de réalisation visible aux figures 1 à 3, l'ensemble multi-râpes 1 comporte des première et deuxième râpes 2, 3 et une partie de préhension 8. Les première et deuxième râpes 2, 3 comportent chacune une plaque métallique 10, 30 munie d'ouvertures 11, 31 formant des saillies effilées. Les ouvertures 11 de la première râpe 2 présentent une taille inférieure aux ouvertures 31 de la deuxième râpe 3 pour permettre à un utilisateur de préparer des aliments râpés ou tranchés selon deux tailles différentes. Les première et deuxième râpes 2, 3 s'étendent selon un axe longitudinal 4 et comportent une bordure périphérique 12, 32 en matière plastique. La bordure périphérique 12, 32 est obtenue par une opération de surmoulage sur la plaque métallique 10, 30.

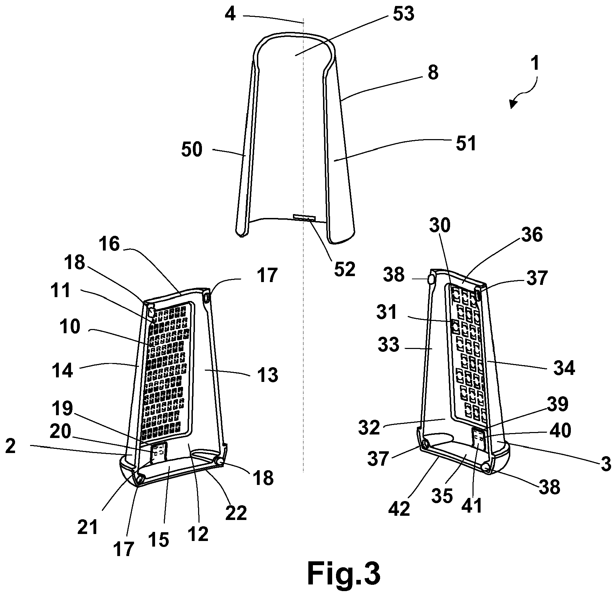

Tel que visible aux figures 2 et 3, la bordure périphérique 12 comporte de part et d'autre de l'axe longitudinal 4 deux parois latérales 13, 14 incurvées, à une première extrémité longitudinale une paroi inférieure 15 incurvée et à une deuxième extrémité longitudinale une paroi supérieure 16. La bordure périphérique 32 comporte de part et d'autre de l'axe longitudinal 4 deux parois latérales 33, 34 incurvées, à une première extrémité une paroi inférieure 35 incurvée et à une deuxième extrémité une paroi supérieure 36.

Les première et deuxième râpes 2, 3 sont destinées à être agencées en vis-à-vis l'une de l'autre dans une position assemblée pour former un récipient 5 (Fig.1) présentant un fond formé par les parois inférieures 15, 35 et une ouverture 6 formée par les parois supérieures 16, 36. Le récipient 5 s'étend selon l'axe longitudinal 4 et présente une forme tronconique dont la section transversale est oblongue. Les bordures périphériques 12, 32 comportent respectivement des protubérances 18, 38 et des logements 17, 37 (Fig.2 et 3) qui coopèrent pour positionner les première et deuxième râpes 2, 3 dans la position assemblée. Les première et deuxième râpes 2, 3 sont assemblés selon une direction 7 perpendiculaire à l'axe longitudinal 4 (Fig.2).

Tel que visible à la figure 2, la partie de préhension 8 présente une forme générale tronconique s'étendant selon l'axe longitudinal 4 et comportant une section transversale en forme de C comprenant deux extrémités libres 50, 51. La partie préhension 8 est insérée sur les première et deuxième râpes 2, 3 selon une course parallèle à l'axe longitudinal 4 pour que les extrémités libres 50, 51 qui coopèrent avec les parois latérales 13, 14 ou 33, 34 de la première 2 ou de la deuxième râpe 3 maintiennent les première et deuxième râpes 2, 3 en position assemblée lorsque la partie de préhension 8 est en fin de course d'insertion.

Les première et deuxième râpes 2, 3 comportent un verrou 19, 39 mobile entre une position avancée et une position reculée. Le verrou 19, 39 est agencé à une extrémité d'une languette souple 21, 41 qui forme des moyens de rappel de la position reculée vers la position avancée. La partie de préhension 8 comporte un logement de réception 52 du verrou 19 ou 39. Dans la partie finale de sa course d'insertion, la partie de préhension 8 appuie sur une face inclinée du verrou 19 ou 39 pour faire passer le verrou 19 ou 39 de la position avancée à la position reculée, puis en fin de la course d'insertion de la partie de préhension 8, le verrou 19 ou 39 reprend sa position avancée pour se positionner dans le logement de réception 52 et ainsi, verrouiller la partie de préhension 8 sur les râpes 2, 3. Un bouton 20, 40 est agencé sur chaque languette souple 21, 41. Un appui de l'utilisateur sur le bouton 20, 40 permet de faire passer le verrou 19, 39 de la position avancée à la position reculée et ainsi, la partie préhension 8 est libérée et peut être déplacée.

Le verrou 19, 39, le bouton 20, 40 et la languette souple 21, 41 sont agencés dans la paroi inférieure 15, 35 et réalisés dans la même matière plastique que la bordure périphérique 12, 32. Une peau en matière élastomère est surmoulée sur la paroi inférieure 15, 35 pour former un pied antidérapant 22, 42.

La partie de préhension 8 comporte une excroissance s'étendant selon l'axe longitudinal 4 pour former un bec verseur 53 agencé prés de l'ouverture 6 lorsque la partie de préhension est verrouillée sur les râpes 2, 3.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, l'ensemble multi-râpes comporte trois râpes démontables agencées en triangle et la partie de préhension recouvre deux des trois râpes.

## Revendications

1. Ensemble multi-râpes (1) comportant au moins des première et deuxième râpes (2, 3) agencées en vis à vis et une partie de préhension (8), les première et deuxième râpes (2, 3) étant agencées de manière démontable pour prendre une position assemblée de travail ou une position séparée, notamment de nettoyage, la partie de préhension (8) étant agencée de manière amovible en regard de la première (2) ou de la deuxième râpe (3) pour recouvrir la première (2) ou la deuxième râpe (3) en position assemblée de travail et ainsi rendre la première (2) ou de la deuxième râpe (3) qui n'est pas utilisée inaccessible à la main de l'utilisateur, les première et deuxième râpes ainsi que la partie de préhension pouvant être séparées par l'utilisateur facilement, sans nécessiter la mise en œuvre d'un outil, et **caractérisé en ce que**
la partie de préhension (8) présente une forme tronconique s'étendant selon un axe longitudinal (4) et comportant une section transversale en forme de C comprenant deux extrémités libres (50, 51), formant des moyens de maintien des première et deuxième râpes (2, 3) en position assemblée ; et
les première et deuxième râpes (2, 3) s'étendent selon l'axe longitudinal (4) et comportent deux parois latérales (13, 14, 33, 34) agencées de part et d'autre dudit axe longitudinal (4), les extrémités libres (50, 51) coopèrent avec les parois latérales (13, 14, 33, 34) de la première (2) ou de la deuxième râpe (3) en position assemblée.

2. Ensemble multi-râpes (1) selon la revendication 1, **caractérisé en ce que** les première et deuxième râpes (2, 3) comportent des moyens d'assemblage male (18, 38)/femelle (17, 37).

3. Ensemble multi-râpes (1) selon la revendication 2, **caractérisé en ce que** les moyens d'assemblage male sont formés par au moins une protubérance (18, 38) et **en ce que** les moyens d'assemblage femelle sont formés par au moins un logement (17, 37).

4. Ensemble multi-râpes (1) selon l'une des revendications 1 à 3, **caractérisé en ce que** la partie de préhension (8) et les première et deuxième râpes (2, 3) comportent des moyens de verrouillage (52, 19, 39) de la partie de préhension (8) sur la première ou sur la deuxième râpe (2, 3) en position assemblée.

5. Ensemble multi-râpes (1) selon la revendication 4, **caractérisé en ce que** les moyens de verrouillage de la partie de préhension (8) sont formés par un logement de réception (52) et **en ce que** les moyens de verrouillage des première et deuxième râpes (2, 3) sont formés par un verrou (19, 39) mobile muni d'un bouton (20, 40) de manœuvre.

6. Ensemble multi-râpes (1) selon l'une des revendications 1 à 5, **caractérisé en ce que** les première et deuxième râpes (2, 3) forment un récipient (5) muni d'une ouverture (6) en position assemblée.

7. Ensemble multi-râpes (1) selon la revendication 6, **caractérisé en ce que** la partie préhension (8) forme un bec verseur (53) agencé près de l'ouverture (6).

8. Ensemble multi-râpes (1) selon l'une des revendications 1 à 7, **caractérisé en ce qu'**il comporte un pied antidérapant (22, 42).

9. Ensemble multi-râpes (1) selon l'une des revendications 1 à 8, **caractérisé en ce que** les première et deuxième râpes (2, 3) comportent une plaque métallique (10, 30) munie d'ouvertures (11, 31) formant des saillies effilées et une bordure périphérique (12, 32) en matière plastique, ladite bordure périphérique (12, 32) étant obtenue par une opération de surmoulage sur ladite plaque métallique (10, 30).

10. Ensemble multi-râpes (1) selon la revendication 9, **caractérisé en ce que** le pied antidérapant (22, 42) est réalisé par une opération de surmoulage partiel sur la bordure périphérique (12, 32).

## Patentansprüche

1. Anordnung mit mehreren Raspeln (1), aufweisend mindestens eine gegenüberliegende erste und zweiten Raspel (2, 3) und einen Griffteil (8), wobei die erste und zweite Raspel (2, 3) in demontierbarer Weise angeordnet sind, um eine zusammengebaute Arbeitsposition oder eine getrennte Position, insbesondere zur Reinigung, einzunehmen, wobei der Griffteil (8) entfernbar gegenüber der ersten (2) oder der zweiten Raspel (3) angeordnet ist, um die erste (2) oder zweite Raspel (3) in der zusammengebauten Arbeitsposition abzudecken und somit die erste (2) oder die zweite Raspel (3), die nicht verwendet wird, für die Hand des Benutzers unzugänglich zu machen, wobei die erste und die zweite Raspel sowie der Griffteil durch den Benutzer einfach getrennt werden können, ohne den Einsatz eines Werkzeugs zu erfordern, und **dadurch gekennzeichnet,**
**dass** der Griffteil (8) eine kegelstumpfförmige Form aufweist, die sich entlang einer Längsachse (4) erstreckt und einen C-förmigen Querschnitt aufweist, der zwei freie Enden (50, 51) umfasst, die Mittel zum Halten der ersten und zweiten Raspel (2, 3) in der zusammengebauten Position bilden; und
**dass** die erste und die zweite Raspel (2, 3) sich entlang der Längsachse (4) erstrecken und zwei Seitenwände (13, 14, 33, 34) aufweisen, die beiderseits der Längsachse (4) angeordnet sind, wobei die freien Enden (50, 51) mit den Seitenwänden (13, 14, 33, 34) der ersten (2) oder der zweiten (3) Raspel in der zusammengebauten Position zusammenwirken.

2. Anordnung mit mehreren Raspeln (1) nach Anspruch 1, **dadurch gekennzeichnet, dass** die erste und die zweite Raspel (2, 3) männliche (18, 38)/weibliche (17, 37) Zusammenbaumittel aufweisen.

3. Anordnung mit mehreren Raspeln (1) nach Anspruch 2, **dadurch gekennzeichnet, dass** die männlichen Zusammenbaumittel durch mindestens einen Vorsprung (18, 38) gebildet sind, und dass die weiblichen Zusammenbaumittel durch mindestens ein Gehäuse (17, 37) gebildet sind.

4. Anordnung mit mehreren Raspeln (1) nach einem der Ansprüche 1 bis 3, **dadurch gekennzeichnet, dass** der Griffteil (8) und die erste und die zweite Raspel (2, 3) Verriegelungsmittel (52, 19, 39) des Griffteils (8) an der ersten oder der zweiten Raspel (2, 3) in der zusammengebauten Position aufweisen.

5. Anordnung mit mehreren Raspeln (1) nach Anspruch 4, **dadurch gekennzeichnet, dass** die Verriegelungsmittel des Griffteils (8) von einem Aufnahmegehäuse (52) gebildet sind, und dass die Verriegelungsmittel der ersten und zweiten Raspel (2, 3) von einem beweglichen Riegel (19, 39) gebildet sind, der mit einem Betätigungsknopf (20, 40) versehen ist.

6. Anordnung mit mehreren Raspeln (1) nach einem der Ansprüche 1 bis 5, **dadurch gekennzeichnet, dass** die erste und die zweite Raspel (2, 3) in zusammengebauter Position einen Behälter (5), der mit einer Öffnung (6) versehen ist, bilden.

7. Anordnung mit mehreren Raspeln (1) nach Anspruch 6, **dadurch gekennzeichnet, dass** der Griffteil (8) einen nahe der Öffnung (6) angeordneten Ausguss (53) bildet.

8. Anordnung mit mehreren Raspeln (1) nach einem der Ansprüche 1 bis 7, **dadurch gekennzeichnet, dass** sie einen rutschfesten Fuß (22, 42) aufweist.

9. Anordnung mit mehreren Raspeln (1) nach einem der Ansprüche 1 bis 8, **dadurch gekennzeichnet, dass** die erste und die zweite Raspel (2, 3) eine Metallplatte (10, 30) aufweisen, die mit Öffnungen (11, 31) versehen ist, die sich verjüngende Vorsprünge und eine Umfangskante (12, 32) aus Kunststoffmaterial bilden, wobei die Umfangskante (12, 32) durch einen Umspritzvorgang der Metallplatte (10, 30) erhalten wird.

10. Anordnung mit mehreren Raspeln (1) nach Anspruch 9, **dadurch gekennzeichnet, dass** der rutschfeste Fuß (22, 42) durch einen teilweisen Umspritzvorgang an der Umfangskante (12, 32) gebildet ist.

## Claims

1. Multi-grater assembly (1) comprising at least first and second graters (2, 3) arranged opposite one another and a gripping portion (8), the first and second graters (2, 3) being arranged such that they can be dismounted to take an assembled working position or a separated position, in particular for cleaning, the gripping portion (8) being arranged such that it can be removed facing the first (2) or the second (3) grater to cover the first (2) or the second grater (3) in the assembled working position and thus make the first (2) or the second (3) grater which is not used, inaccessible to the hand of the user, the first and second graters, as well as the gripping portion which could be separated by the user easily, without requiring the implementation of a tool, and **characterised in that**
the gripping portion (8) has a truncated shape extending along a longitudinal axis (4) and comprising a C-shaped transversal cross-section comprising two free ends (50, 51), forming means for holding the first and second graters (2, 3) in the assembled position; and
the first and second graters (2, 3) extending along the longitudinal axis (4) and comprising two side walls (13, 14, 33, 34) arranged on either side of said longitudinal axis (4), the free ends (50, 51) engage with the side walls (13, 14, 33, 34) of the first (2) or of the second grater (3) in the assembled position.

2. Multi-grater assembly (1) according to claim 1, **characterised in that** the first and second graters (2, 3) comprise male (18, 38)/female (17, 37) assembly means.

3. Multi-grater assembly (1) according to claim 2, **characterised in that** the male assembly means are formed by at least one protrusion (18, 38) and **in that** the female assembly means are formed by at least one housing (17, 37).

4. Multi-grater assembly (1) according to one of claims 1 to 3, **characterised in that** the gripping portion (8) and the first and second graters (2, 3) comprise locking means (52, 19, 39) of the gripping portion (8) on the first or one the second grater (2, 3) in the assembled position.

5. Multi-grater assembly (1) according to claim 4, **characterised in that** the means for locking the gripping portion (8) are formed by a receiving housing (52) and **in that** the means for locking the first and second graters (2, 3) are formed by a mobile lock (19, 39) equipped with a moving button (20, 40).

6. Multi-grater assembly (1) according to one of claims 1 to 5, **characterised in that** the first and second graters (2, 3) form a container (5) equipped with an opening (6) in the assembled position.

7. Multi-grater assembly (1) according to claim 6, **characterised in that** the gripping portion (8) forms a pouring spout (53) arranged near the opening (6).

8. Multi-grater assembly (1) according to one of claims 1 to 7, **characterised in that** it comprises a non-slip base (22, 42).

9. Multi-grater assembly (1) according to one of claims 1 to 8, **characterised in that** the first and second graters (2, 3) comprise a metal plate (10, 30) equipped with openings (11, 31) forming sharp protrusions and a peripheral edge (12, 32) made of plastic material, said peripheral edge (12, 32) being obtained by an overmoulding operation on said metal plate (10, 30).

10. Multi-grater assembly (1) according to claim 9, **characterised in that** the non-slip base (22, 42) is produced by a partial overmoulding operation on the peripheral edge (12, 32).
